# DEMANDE DE BREVET EUROPEEN

(11) **EP 2 255 619 A1**
(43) Date de publication de la demande: **01.12.2010**
(21) Numéro de dépôt: 10305562.0
(22) Date de dépôt: 27.05.2010
(51) Int. Cl.: A01K 45/00

(54) **Installation pour le confinement et la manipulation d'animaux, en particulier de volailles**

(30) Priorité: 27.05.2009 FR 0902547
(71) Demandeur: Cochin-Muset SAS, 49420 Chaze Henry (FR)
(72) Inventeur: Delaunay, Thierry, 49420, LA CHAPELLE HULLIN (FR)
(74) Mandataire: Michelet, Alain

(57) **Abrégé**

La présente invention concerne une installation (1) pour le confinement et la manipulation d'animaux, en particulier de volailles, utile pour les élevages.

Cette installation (1) comporte au moins deux cages (2) pour le confinement chacune d'une pluralité d'animaux, lesquelles cages de confinement (2) sont montées sur un support central (3) par le biais de moyens (5) autorisant leur manoeuvre en hauteur entre - une position basse, située à proximité du sol, et - une position haute, située à distance du sol, lequel support central (3) est monté pivotant selon un axe vertical de rotation (3'), pour assurer la manoeuvre en rotation autour dudit axe vertical de rotation (3') des cages de confinement (2) associées.

Cette installation permet une manipulation des animaux et leur confinement dans les cages (2) selon un mode en temps masqué : le temps nécessaire au traitement des animaux situés au niveau du poste de travail est mis à profit pour confiner d'autres animaux dans la cage située au niveau du poste de chargement.

## Description

La présente invention concerne une installation pour le confinement et la manipulation d'animaux, à destination des élevages et en particulier des élevages de volailles.

Dans les élevages intensifs comme dans les exploitations de taille plus modeste, les animaux sont amenés à subir ponctuellement des opérations de confinement et de manipulation, nécessaires en particulier pour la réalisation d'actes vétérinaires (notamment les actes prophylactiques de vaccination par injection).

Or, à ce jour, ces opérations de manipulation et de confinement s'accomplissent souvent d'une manière relativement empirique et artisanale, sans assistance mécanique ou automatisée spécifiquement dédiée.

Dans le cas des volailles, les opérateurs sont souvent amenés à confiner les animaux au moyen soit de bottes de paille soit de cloisons amovibles.

A l'intérieur du périmètre circonscrit, un ou plusieurs opérateurs orientent les animaux vers un ou plusieurs autres opérateurs en charge de réaliser l'acte vétérinaire souhaité.

Dans cette méthode de travail, tant les opérateurs chargés de rabattre les animaux que ceux chargés de les traiter sont obligés de tenir compte de la mobilité extrême des volailles, de leurs craintes de l'homme qui les incitent à s'éloigner d'eux et de leur relative petite taille. Les opérateurs en charge de réaliser l'acte vétérinaire sont en plus soit obligés de se baisser pour attraper les volailles au sol, soit assis dans l'enclos, ce qui contraint alors un second opérateur à attraper la volaille pour la présenter au premier ; ces mauvaises conditions et postures de travail posent divers problèmes : risques d'auto-injection, risques de lombalgies et traumatismes articulaires divers, etc.

Une autre méthode de confinement et de manipulation des volailles consiste à les enfermer en lots dans des caisses qui sont ensuite relevées à hauteur d'opérateur au moyen d'un engin élévateur.

Cette méthode de travail s'avère relativement complexe, avec une perte de temps importante à chaque opération de remplissage des caisses. En outre, cette méthode n'est pas utilisable dans les structures d'élevage sur caillebotis.

Pour ces raisons, en l'état actuel, les opérations de traitement vétérinaire sont souvent longues, fatigantes et fastidieuses. Elles obligent également l'intervention d'un nombre important d'opérateurs, et ne sont pas sans présenter certains risques pour ces derniers (comme abordé ci-dessus).

L'installation développée par la demanderesse a pour intérêt de pallier l'absence de dispositifs spécifiquement adaptés à ces opérations de confinement et de manipulation ; elle autorise une cinématique améliorant les conditions de travail, l'ergonomie et donc la sécurité des personnes concernées, tout en apportant des gains substantiels de productivité.

Pour cela, l'installation selon l'invention est caractérisée par le fait qu'elle comporte au moins deux cages pour le confinement chacune d'une pluralité d'animaux, et ces cages de confinement sont montées sur un support central par le biais de moyens autorisant leur manoeuvre en hauteur entre - une position basse, située à proximité du sol et - une position haute située à distance du sol, lequel support central est monté pivotant selon un axe vertical de rotation, pour assurer la manoeuvre en rotation, autour dudit axe vertical de rotation, desdites cages de confinement associées.

Cette installation particulière permet ainsi de faire passer successivement et alternativement chacune des cages de confinement, selon un trajet circulaire et variable en hauteur, entre - une position basse située au niveau d'un poste de chargement, pour faciliter les opérations de remplissage et de confinement, et - une position haute située au niveau d'un poste de travail, pour la manipulation des animaux dans des conditions d'ergonomie et de sécurité optimales.

Grâce à cet équipement et à la cinématique de rotation et de mobilité verticale (ou autrement dit en élévation) des cages, le confinement et la manipulation des animaux peuvent s'effectuer selon un mode quasi ininterrompu dit « en temps masqué » : le temps nécessaire au traitement des animaux situés au niveau du poste de travail est mis à profit pour confiner d'autres animaux dans la cage située au niveau du poste de chargement.

D'autres caractéristiques de l'invention, pouvant être prises en combinaison ou indépendamment les unes des autres, sont détaillées ci-après :
- Les cages de confinement sont au nombre de deux, et elles sont agencées de part et d'autre du support central.
- Les cages de confinement comportent un élément formant plancher, et leurs moyens de manoeuvre en hauteur sont structurés pour assurer, d'une part, le maintien dudit plancher parallèlement ou au moins sensiblement parallèlement à lui-même lors de ladite manoeuvre verticale des cages, et d'autre part, la manoeuvre en hauteur desdites cages de manière synchrone et dans un sens inversé l'une par rapport à l'autre (lorsqu'une cage monte, l'autre descend). Dans ce cas, les moyens de manoeuvre des cages consistent avantageusement en un système de parallélogramme déformable associé à au moins un vérin de manoeuvre ; ce système de parallélogramme déformable se compose de deux balanciers, l'un supérieur et l'autre inférieur, comportant chacun deux longerons, situés parallèlement et de part et d'autre du support central, reliés par deux traverses, lesquels longerons portent les cages de confinement et sont associés, au milieu de leur longueur, au support central, chacun par le biais d'un axe de pivotement horizontal ou au moins sensiblement horizontal, lesdits axes de pivotement de longerons étant situés à distance et parallèlement l'un par rapport à l'autre ; de plus les longerons des deux balanciers sont reliés l'un à l'autre par au moins deux tirants situés chacun d'un côté desdits axes de pivotement de longerons.

Dans ce dernier cas, les axes de pivotement de longerons sont avantageusement réglables sur la hauteur du support central, en particulier pour adapter la hauteur de la cage située au niveau du poste de traitement/
- Le support central est monté sur un organe de piètement, destiné à reposer sur le sol, par le biais des moyens autorisant sa rotation selon l'axe vertical de rotation.

Selon une autre particularité, chaque cage de confinement se compose d'un élément de plancher prolongé par une ceinture de parois latérales délimitant une ouverture supérieure.

Selon cette particularité, au moins une partie de l'une au moins des parois latérales constitue avantageusement une porte latérale manoeuvrable entre - une position ouverte, pour libérer une ouverture latérale ménagée au niveau de ladite ceinture de parois et pour former une barrière de guidage des animaux vers ladite ouverture latérale, et - une position fermée, pour l'obturation de ladite ouverture latérale.

L'installation comporte encore de préférence une rampe pour faciliter l'accès à l'ouverture latérale d'une cage de confinement en position basse, laquelle rampe d'accès est destinée à reposer sur le sol et comporte au moins une paroi destinée à coopérer avec la porte latérale en position ouverte pour guider les animaux au travers de ladite ouverture latérale.

Toujours selon cette particularité, chaque cage de confinement comporte avantageusement un volet supérieur, qui est manoeuvrable entre - une position abaissée, pour obturer l'ouverture supérieure de ladite cage de confinement, et - une position relevée à la verticale ou sensiblement à la verticale, pour constituer un élément masquant la vision des animaux d'une cage vers l'autre.

Encore selon cette particularité, chaque cage de confinement comporte de préférence au moins une paroi latérale de forme générale diédrique, comprenant une partie inférieure côté plancher et une partie supérieure inclinée s'éloignant progressivement de la paroi latérale en regard, de manière à former une zone d'appui propice à la réalisation d'une vaccination.

Selon une autre caractéristique, les cages de confinement sont fixées aux moyens de manoeuvre en hauteur par un système de liaison rapide à deux points.

D'autre part et de manière avantageuse, le support central est monté libre en rotation autour de son axe vertical, et il coopère avec des moyens désactivables d'indexation, pour assurer le verrouillage en rotation dudit support central selon des positions déterminées pour les cages de confinement.

L'invention sera encore illustrée, sans être aucunement limitée, par la description suivante d'une forme de réalisation particulière, en association avec les dessins annexés dans lesquels :
- la figure 1 est une vue générale et en perspective de l'installation selon l'invention ;
- la figure 2 est une vue schématique et de côté de l'installation selon la figure 1 ;
- la figure 3 est une vue de dessus de l'installation selon les figures 1 et 2 ;
- la figure 4 est une autre vue de l'installation selon les figures 1 à 3, avec une perspective orientée de sorte à montrer le positionnement de la cage de confinement en position basse de chargement par rapport à la rampe d'accès.

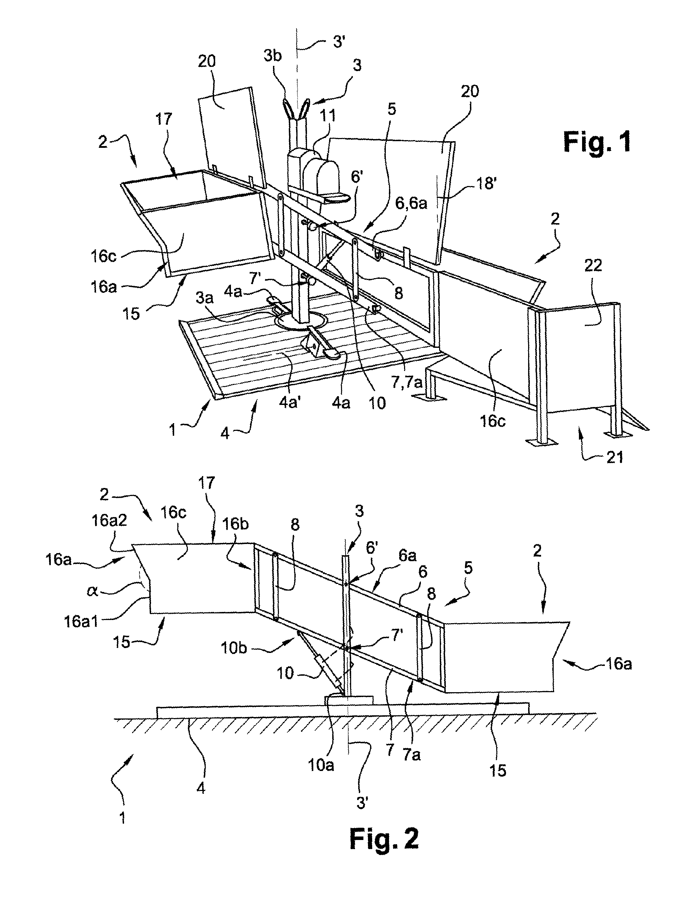

L'installation 1, telle que représentée sur les figures 1 à 4, comporte des cages 2, ici au nombre de deux, destinées chacune au confinement de plusieurs animaux.

Ces cages 2 sont montées en porte-à-faux sur un support central 3, en forme de montant vertical, de part et d'autre de ce dernier. L'extrémité inférieure de ce support 3 est elle-même portée par un piètement 4, apte à reposer sur le sol.

Conformément à la présente invention, les cages de confinement 2 sont chacune manoeuvrables selon une trajectoire variable en hauteur et circulaire autour d'un axe vertical central 3', cela entre une position basse de chargement (à droite, sur les figures 1 et 2) et une position haute de travail (à gauche, sur les figures 1 et 2).

Cette manoeuvre particulière des cages 2 permet d'optimiser la manipulation des animaux, notamment dans le cadre d'actes vétérinaires et en particulier d'actes prophylactiques.

Pour cela, les cages 2 sont tout d'abord montées sur le support central 3 par le biais de moyens 5 autorisant leur manoeuvre en hauteur.

Cette manoeuvre en hauteur des deux cages de confinement 2 s'effectue ici de manière synchrone ou concomitante, dans un sens inverse ou contraire l'une par rapport à l'autre. Les cages 2 sont en plus manoeuvrées en hauteur de sorte que leur élément de plancher (décrit par la suite) reste constamment à l'horizontale, ou au moins approximativement à l'horizontale.

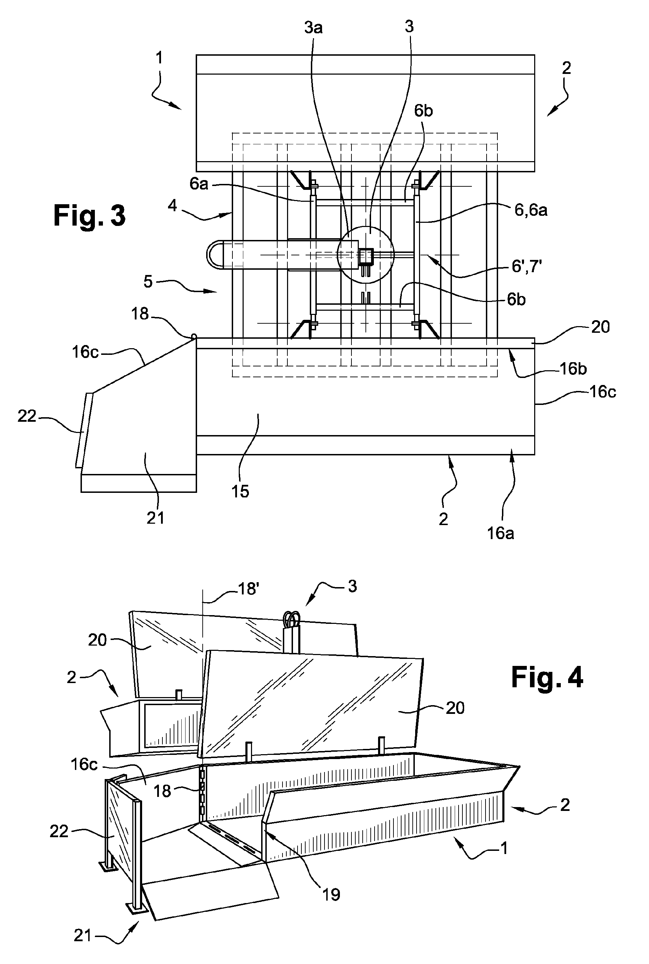

Les moyens de manoeuvre en hauteur 5 correspondants sont représentés plus en détail sur les figures 1 et 3.

Ces moyens 5 se présentent sous la forme d'un système de parallélogramme déformable composé de deux cadres formant balanciers, l'un supérieur 6 et l'autre inférieur 7, qui comportent chacun deux longerons désignés respectivement par les repères 6a et 7a (figures 1 et 2), reliés par deux traverses désignées respectivement par les repères 6b et 7b (figure 3).

Les deux longerons 6a et 7a de chaque balancier 6 et 7 sont disposés de part et d'autre du support central 3 et ils s'étendent parallèlement et à distance l'un de l'autre. Ces deux longerons 6a et 7a sont associés au support central 3, au milieu de leur longueur, chacun par le biais d'un axe de pivotement horizontal ou au moins sensiblement horizontal, désignés respectivement par les repères 6' et 7' ; ces axes de pivotement 6' et 7' se situent à distance et parallèlement l'un par rapport à l'autre, et ils s'étendent perpendiculairement par rapport aux longerons 6a et 7a associés.

Les longerons 6a et 7a des balanciers 6 et 7, situés d'un même côté du support central 3, sont reliés par deux tirants 8, disposés chacun d'un côté des axes de pivotement de longerons 6 et 7 précités.

Ces tirants 8 sont assemblés verticalement avec les longerons 6a et 7a en regard, par le biais de liaisons pivot dont les axes de rotation sont parallèles aux axes pivotement des longerons 6' et 7'.

De plus, les balanciers 6 et 7 peuvent être chacun assemblés sur le support central 3 selon plusieurs hauteurs prédéfinies.

Les axes de pivotement 6' et 7' de leurs longerons 6a et 7a sont pour cela positionnables selon plusieurs emplacements différents (non représentés).

Les emplacements pour un même axe de pivotement 6' ou 7' sont alignés verticalement, et sont par exemple au nombre de deux à une distance de l'ordre de 10 cm l'un de l'autre. Cette particularité structurelle permet d'adapter le positionnement des cages, et principalement la hauteur de la cage située au niveau du poste de traitement, pour tenir compte de la taille des opérateurs en charge des opérations de traitement.

Les longerons 6a et 7a portent, au niveau de leurs extrémités, les deux cages de confinement 2.

Un système de fixation rapide dit « à deux points », est prévu entre les cages 2 et les longerons 6a et 7a : les cages de confinement 2 comportent chacune des organes cylindriques supérieurs et inférieurs venant se loger et pivoter dans des logements complémentaires ménagés sur une partie de la hauteur des longerons 6a et 7a des balanciers supérieur 6 et inférieur 7, et s'ouvrant vers le haut.

Ce système particulier de fixation permet la pose et l'enlèvement aisés des cages de confinement 2, sans outillage spécifique. Cela permet également de faciliter les opérations de manutention et de nettoyage de la machine.

L'actionnement des moyens de manoeuvre en hauteur 5 est assuré de façon autonome, ici par un vérin hydraulique à double effet 10 dont la pression est fournie par un compresseur hydraulique 11 fixé en partie haute du support central 3 (figure 1).

Ce vérin hydraulique 10 est monté entre deux chapes : l'une inférieure 10a portée par le support central 3 et l'autre supérieure 10b portée par l'une des traverses 6b ou 7b de l'un des balanciers 6 ou 7 (une traverse 6b du balancier supérieur 6 pour la figure 1, et de manière alternative, une traverse 7b du balancier inférieur 7 pour la figure 2).

Comme abordé ci-dessus, les cages de confinement 2 sont également manoeuvrables en rotation autour d'un axe vertical central 3', passant par la structure support 3.

Le support central 3 est pour cela ici monté sur le piètement 4, au niveau de son extrémité inférieure, par le biais de moyens autorisant sa rotation selon cet axe de rotation central 3', par exemple du type rond d'avant-train.

Le support central 3 coopère en plus avec le piètement 4 par le biais de moyens assurant son indexation autour de l'axe de rotation 3', de sorte à convenablement verrouiller les cages 2 autour dudit axe de rotation 3' au niveau des postes de chargement et de traitement.

En particulier, l'extrémité inférieure du support central 3 comporte une platine 3a, munie sur son pourtour de deux encoches (non visibles) s'ouvrant vers le haut.

Le piètement 4 comporte quant à lui deux organes de verrouillage désactivables 4a, se présentant chacun sous la forme d'une pédale dont l'extrémité centrale est apte à venir se loger dans l'une desdites encoches, et qui est montée pivotante sur le piètement 4 selon un axe de rotation 4a'.

De plus, ce support central 3 est encore muni au niveau de son extrémité supérieure d'un moyen pour sa préhension par un engin élévateur, ici sous forme d'une paire d'anneaux de fixation 3b.

Par ailleurs, l'installation 1 peut être munie de moyens autorisant son déplacement autonome, par poussée et traction manuelles. Par exemple, le piètement 4 peut être équipé de roues ou roulettes, qui peuvent s'escamoter lors de la manipulation des animaux au moyen de l'installation 1.

Les cages de confinement 2 se présentent ici chacune sous la forme générale d'une caisse, composée d'un ensemble de plaques métalliques portées par une ossature en profilés mécano-soudés.

Ces plaques métalliques peuvent être du type tôle pliée (inox ou aluminium).

Chaque cage de confinement 2 se compose d'un élément de plancher 15 prolongé par une ceinture de parois latérales 16 : deux parois latérales longitudinales, l'une avant 16a (à distance du support central 3) et l'autre arrière 16b (en regard dudit support central 3), reliées par deux parois latérales transversales 16c à distance et parallèles l'une à l'autre.

Les dimensionnements des cages 2 sont adaptés notamment à certaines spécificités des animaux et à l'élevage.

A titre d'exemple, cette cage 2 présente une longueur comprise entre 2 et 3 mètres (ici environ 2,3 m), une largeur comprise entre 0,5 et 0,8 mètre (par exemple 0,61 m au niveau du plancher, et 0,69 m au niveau de l'ouverture supérieure), et une hauteur comprise entre 0,3 et 0,7 mètre (en l'occurrence de l'ordre de 0,4 m).

Comme représenté en particulier sur la figure 2, la paroi longitudinale avant 16a, se présente ici sous la forme d'un élément diédrique comprenant :
- une partie inférieure 16a1 s'étendant à l'équerre, ou approximativement à l'équerre, par rapport au plancher 15, et
- une partie supérieure 16a2, inclinée vers l'extérieur et s'éloignant progressivement (du bas vers le haut) de la paroi longitudinale arrière 16b en regard.

L'angle α entre ces deux parties 16a1 et 16a2 de la paroi avant 16a est par exemple compris entre 150° et 160°, et de préférence de l'ordre de 157°.

Cette structure diédrique de la paroi avant 16a est destinée principalement à former une zone d'appui interne propice au positionnement correct des animaux pour la vaccination, comme développé par la suite. Elle permet également d'agrandir les dimensions de l'ouverture supérieure 17, délimitée par la bordure supérieure des parois latérales 16, pour faciliter la préhension des animaux confinés.

L'une au moins des parois transversales 16c est ici associée à la paroi arrière 16b par une structure de charnière 18, au niveau de leurs bordures verticales attenantes, pour autoriser sa manoeuvre autour d'un axe de pivotement vertical 18' (figure 4).

Cette paroi transversale 16c constitue alors une porte latérale manoeuvrable entre - une position ouverte (représentée sur les figures 1 et 4), pour libérer une ouverture latérale 19 (figure 4) ménagée au niveau des parois latérales 16, et - une position fermée, permettant l'obturation de ladite ouverture latérale 19.

Tel que représenté en particulier sur la figure 4, cette ouverture latérale 19 présente ici une section en forme de U, qui est délimitée par un ensemble de bordures : l'une des bordures de la paroi de fond 15 prolongée par la bordure des deux parois latérales longitudinales 16a et 16b.

Chaque cage de confinement 2 comporte encore un volet supérieur 20 associé à la paroi latérale arrière 16b, et dont les dimensions correspondent, au moins approximativement, à celles de l'ouverture supérieure 17.

Ce volet supérieur 20 est destiné à servir à la fois de couvercle et d'élément occultant.

Pour cela, il est assemblé sur la cage de confinement 2 par le biais de charnières autorisant sa manoeuvre entre - une position abaissée (non représentée), pour obturer l'ouverture supérieure 17 de la cage 2 associée (utile notamment comme protection lors des périodes de non-utilisation de la machine, et pour faciliter les opérations de désolidarisation des cages par rapport au support central), et - une position relevée à la verticale ou sensiblement à la verticale (représentée en particulier sur les figures 1 et 4) dans le prolongement de la paroi arrière 16b, pour constituer un élément masquant la vision des animaux en direction de l'autre cage.

Tel que représenté en particulier sur les figures 1 et 4, l'installation 1 comporte encore une rampe 21, accessoire de l'installation, dont la hauteur et l'inclinaison peuvent s'adapter par un système de pieds réglables, afin d'effacer pour les volailles toute différence de niveaux entre le sol sur lequel elles cheminent et le plancher 15 de la cage de confinement 2 en position basse de chargement.

Cette rampe 21 comporte au moins une paroi latérale verticale 22, destinée à venir en regard et à distance de l'ouverture latérale 19 de la cage de confinement 2 en position basse. Comme développé par la suite, cette paroi latérale de rampe 22 coopère avec la porte latérale 16c en position ouverte, pour guider les animaux au travers de cette ouverture latérale 19.

En pratique, l'installation 1 est tout d'abord configurée de sorte que l'une des deux cages de confinement 2 soit amenée en position basse, avec le couvercle 20 relevé et la porte d'accès 16c ouverte.

La rampe d'accès 21 est installée et réglée de telle sorte qu'il n'y ait aucune rupture de cheminement (trous, différence de niveau, etc.) perceptible par les volailles, entre ladite rampe 21 et le plancher 15 de la cage de confinement associée. Ce réglage initial de la rampe d'accès 21 est réalisé une fois pour toute la durée des opérations.

Cette cage de confinement 2 en position basse, associée à la rampe d'accès 21, se situe ainsi au niveau d'un poste dit de chargement.

Un ou plusieurs opérateurs sont ensuite chargés de rabattre les volailles à traiter vers la rampe d'accès 21 ; ces volailles montent sur cette rampe 21, et elles sont guidées par la paroi de rampe 22 et par la porte 16c située dans son prolongement, jusqu'à pénétrer au travers de l'ouverture latérale 19.

Les volailles accèdent facilement, rapidement et de manière autonome à cette cage 2 en position de chargement, sans qu'il soit nécessaire pour l'opérateur de charger les animaux manuellement et individuellement.

Une fois cette cage de confinement 2 pleine (quantité de volailles variable selon leur taille et leur poids), l'opérateur ferme la porte d'accès 16c.

Les volailles sont alors prisonnières et confinées dans la cage 2.

Un opérateur désactive les moyens d'indexation 3a, 4a du piètement 4, puis actionne le compresseur hydraulique 11 pour assurer la manoeuvre inverse des deux cages 2 en hauteur, tout en assurant leur rotation par simple poussée manuelle.

Les cages de confinement 2 suivent une trajectoire circulaire sur 180°, autour de l'axe de pivotement vertical 3' du support central 3.

Elles se positionnent automatiquement au niveau des postes de travail et de chargement, en particulier grâce aux moyens d'indexation 3a, 4a.

La cage de confinement 2, remplie de volailles, arrive automatiquement à hauteur de travail, au niveau du poste dit de traitement.

Le personnel chargé de l'opération de traitement travaille debout, sans avoir à se baisser ou à se plier en deux.

La préhension des volailles est rendue aisée par l'espace clos restreint constitué par la ceinture de parois latérales 16. En outre, le dimensionnement étudié de ces parois 16 fait que le cou des volailles à traiter se trouve idéalement à hauteur de main de l'opérateur. Seulement à titre d'exemple, dans cette position haute, la bordure supérieure de la paroi avant 16a se situe à une hauteur comprise entre 0,8 m et 1 mètre par rapport au sol, et le plancher 15 se situe à une hauteur comprise entre 0,45 m et 0,55 mètre par rapport au sol.

Dans le cas d'un traitement du type injection, lorsqu'une volaille est saisie, l'opérateur vient appliquer l'animal contre la paroi avant 16a. Il bénéficie alors de la forme particulière diédrique de cette paroi avant 16a qui est adaptée pour lui permettre de réaliser le pli cervical cutané requis, sans effort, de façon assurée et d'une seule main.

Dès le traitement réalisé, il peut relâcher derrière lui la volaille, par exemple dans un périmètre préalablement circonscrit et destiné à séparer les volailles déjà traitées de celles à traiter.

Pendant le temps nécessaire aux traitements des volailles contenues dans la cage de confinement 2 située au niveau du poste de traitement, un ou plusieurs autres opérateurs peuvent orienter à nouveau un groupe de volailles vers la seconde cage 2 venue se placer automatiquement au niveau du poste de chargement.

La paroi supérieure 20 de cette cage 2, en position relevée, permet d'occulter la vision des animaux rabattus en direction du poste de traitement ; la présence de l'autre côté de l'installation du ou des opérateurs chargés de réaliser l'acte vétérinaire est masquée.

Lorsque le premier groupe de volailles est entièrement traité, le cycle d'élévation/rotation des cages 2 peut être relancé : la cage 2 vide revient au niveau du poste de chargement et la cage 2 pleine atteint le poste de traitement.

Ces opérations sont répétées jusqu'à épuisement complet du groupe de volailles à traiter.

L'installation selon l'invention a l'intérêt d'offrir une ergonomie adaptée à de nombreuses opérations de manipulation et de traitement des animaux, tout en préservant l'intégrité physique des opérateurs.

Cette installation a également l'intérêt de présenter une sécurité accrue au regard des risques potentiels d'auto-injection. Elle apporte aussi un gain de productivité, et permet de diminuer le nombre d'opérateurs nécessaires aux opérations.

## Revendications

1. Installation pour le confinement et la manipulation d'animaux, en particulier de volailles, **caractérisée en ce qu'**elle comporte au moins deux cages (2) pour le confinement chacune d'une pluralité d'animaux, lesquelles cages de confinement (2) sont montées sur un support central (3) par le biais de moyens (5) autorisant leur manoeuvre en hauteur entre - une position basse, située à proximité du sol, et - une position haute, située à distance du sol, lequel support central (3) est monté pivotant selon un axe vertical de rotation (3'), pour assurer la manoeuvre en rotation autour dudit axe vertical de rotation (3') des cages de confinement (2) associées.

2. Installation selon la revendication 1, **caractérisée en ce que** les cages de confinement (2) sont au nombre de deux, et sont agencées de part et d'autre du support central (3).

3. Installation selon l'une quelconque des revendications 1 ou 2, **caractérisée en ce que** les cages de confinement (2) comportent un élément formant plancher (15), et **en ce que** les moyens de manoeuvre en hauteur (5) des cages de confinement (2) sont structurés pour assurer, d'une part, le maintien du plancher (15) desdites cages (2) parallèlement ou au moins sensiblement parallèlement à lui-même lors de ladite manoeuvre en hauteur des cages de confinement (2), et d'autre part, la manoeuvre en hauteur des cages de confinement (2) de manière synchrone et dans un sens inversé l'une par rapport à l'autre.

4. Installation selon la revendication 3, **caractérisée en ce que** les moyens de manoeuvre (5) des cages (2) consistent en un système de parallélogramme déformable associé à au moins un vérin de manoeuvre (10), lequel système de parallélogramme déformable se compose de deux balanciers, l'un supérieur (6) et l'autre inférieur (7), comportant chacun deux longerons (6a, 7a), situés parallèlement et de part et d'autre du support central (3), reliés par deux traverses (6b, 7b), lesquels longerons (6a, 7a) portent les cages de confinement (2) et sont associés, au milieu de leur longueur, au support central (3) chacun par le biais d'un axe de pivotement (6', 7') horizontal ou au moins sensiblement horizontal, lesdits axes de pivotement de longerons (6', 7') étant situés à distance et parallèlement l'un par rapport à l'autre, et **en ce que** lesquels longerons (6a, 7a) des deux balanciers (6, 7) sont reliés l'un à l'autre par au moins deux tirants (8) situées chacune d'un côté desdits axes de pivotement de longerons (6', 7').

5. Installation selon la revendication 4, **caractérisée en ce que** les axes de pivotement de longerons (6', 7') sont réglables sur la hauteur du support central (3).

6. Installation selon l'une quelconque des revendications 1 à 5, **caractérisée en ce que** le support central (3) est monté sur un organe de piètement (4), destiné à reposer sur le sol, par le biais des moyens autorisant sa rotation selon l'axe vertical de rotation (3').

7. Installation selon l'une quelconque des revendications 1 à 6, **caractérisée en ce que** chaque cage de confinement (2) se compose d'un élément de plancher (15) prolongé par une ceinture de parois latérales (16) délimitant une ouverture supérieure (17), et **en ce que** au moins une partie de l'une au moins des parois latérales (16c) constitue une porte latérale manoeuvrable entre - une position ouverte, pour libérer une ouverture latérale (19) ménagée au niveau de ladite ceinture de parois latérales (16) et pour former une barrière de guidage des animaux vers ladite ouverture latérale (19), et - une position fermée, pour l'obturation de ladite ouverture latérale (19).

8. Installation selon la revendication 7, **caractérisée en ce qu'**elle comporte encore une rampe (21) pour faciliter l'accès à l'ouverture latérale (19) d'une cage de confinement (2) en position basse, laquelle rampe d'accès (21) est destinée à reposer sur le sol et comporte au moins une paroi latérale (22) destinée à coopérer avec la porte latérale (16c) en position ouverte pour guider les animaux au travers de ladite ouverture latérale (19).

9. Installation selon l'une quelconque des revendications 1 à 8, **caractérisée en ce que** chaque cage de confinement (2) se compose d'un élément de plancher (15) prolongé par une ceinture de parois latérales (16) délimitant une ouverture supérieure (17), et **en ce que** chaque cage de confinement (2) comporte un volet supérieur (20), qui est manoeuvrable entre - une position abaissée, pour obturer l'ouverture supérieure (17) de ladite cage de confinement (2), et - une position relevée à la verticale ou sensiblement à la verticale, pour constituer un élément masquant la vision des animaux d'une cage vers l'autre.

10. Installation selon l'une quelconque des revendications 1 à 9, **caractérisée en ce que** chaque cage de confinement (2) se compose d'un élément de plancher (15) prolongé par une ceinture de parois latérales (16) délimitant une ouverture supérieure (17), et **en ce que** chaque cage de confinement (2) comporte au moins une paroi latérale (16a) de forme générale diédrique, comprenant une partie inférieure (16a1) perpendiculaire ou au moins sensiblement perpendiculaire au plancher (15), et une partie supérieure inclinée (16a2) s'éloignant progressivement de la paroi latérale (16b) en regard, de manière à former une zone d'appui pour l'animal qui est propice à la réalisation d'une vaccination.
